# EUROPEAN PATENT APPLICATION

(11) **EP 3 604 170 A1**
(43) Date of publication of application: **05.02.2020**
(21) Application number: 18186282.2
(22) Date of filing: 30.07.2018
(51) Int. Cl.: B65D 81/32, B65D 25/08, B65D 51/28

(54) **CONTAINER FOR SEPARATELY STORING AT LEAST TWO MATERIALS**

(71) Applicant: Sulzer Mixpac AG, 9469 Haag (Rheintal) (CH)
(72) Inventor: Rolle, Philipp, 25980 Rantum (DE)
(74) Representative: Manitz Finsterwald Patent- und Rechtsanwaltspartnerschaft mbB

(57) **Abstract**

The invention relates to a container (100) for separately storing at least two materials (A, B) comprising:
a first housing (10) comprising a first chamber (16) for storing a first material (A) and comprising an opening (21),
at least one second housing (12) comprising a second chamber (18) for storing a second material (B) and comprising first and second oppositely disposed openings (23, 25), with the first opening (23) of the second chamber (18) being arranged to face the first chamber (16) and being closed off by a first closure film (24) and
a cap (14) moveable along a longitudinal axis (L) of the container (100) towards the first and second chambers (16, 18), the cap (14) comprising a passage (32) and a piercing member (28) being formed at an end of the passage (32) configured to pierce at least one closure film (22, 24, 26) comprising the first closure film (24) on moving the cap (14) from a storage position in which the piercing member (28) is arranged outside of the first and second chambers (16, 18) into an end position in which the piercing member (28) extends through the second chamber (18) and into the first chamber (16), with the passage (32) acting as an outlet (34) from the container (100) in the end position.

## Description

The present invention relates to a container for separately storing at least two materials comprising a first housing with a first chamber for storing a first material and a second housing with a second chamber for storing a second material.

A container of this kind is known for example from US 6,098,795 A, where a puncturer is used for piercing a puncturable seal between the first and second chambers to combine the separately stored materials. Such kind of container is typically used for separately storing materials which on combination or mixture will react with each other, for example components of a two-component adhesive. Usually, these components are combined or mixed just immediately prior to application, i.e. prior to the adhesion of one part to another part.

In some cases, the handling of the container requires both hands to mix the two materials. However, sometimes only one hand is available as the other hand is holding a tool or one of the parts to be adhered.

It is therefore an object of the invention to provide a container for separately storing at least two materials that can be operated faster and in a more simple manner. It is a further object of the invention to provide a container which provides an effective seal around the materials, which functions to improve the lifetime of the materials stored therein.

This object is satisfied by a container according to claim 1.

The container according to the invention preferably comprises a first housing comprising a first chamber for storing a first material and comprising an opening, at least one second housing comprising a second chamber for storing a second material and comprising first and second oppositely disposed openings, with the first opening of the second chamber being arranged to face the first chamber and being closed off by a first closure film and a cap moveable along a longitudinal axis of the container towards the first and second chambers, the cap comprising a passage and a piercing member being formed at an end of the passage configured to pierce at least one closure film comprising the first closure film on moving the cap from a storage position in which the piercing member is arranged outside of the first and second chambers into an end position in which the piercing member extends through the second chamber and into the first chamber, with the passage acting as an outlet from the container in the end position.

The invention is based on the general idea that two materials may be separately stored in a container to ensure a long storage life of the materials. The container further comprises openings which can be closed off by means of the closure films during storage and which can easily be laid open by means of the piercing member. Furthermore, the piercing member also comprises the outlet so that in one swift movement a user can dispense the materials from the container preferably using only one hand.

In other words, in order to combine or mix the two separately stored materials for a subsequent application, the cap and the first and/or second housing are pushed together, wherein the passage of the cap serves the dual purpose of piercing at least one closure film with the piercing member formed on one end of the passage and acting as an outlet for the two combined or mixed materials when the cap is in its end position and the piercing member extends through the second chamber into the first chamber.

This sort of configuration of the container allows for an easy and fast, especially single handed, operation.

The container known from US 6,098,795 A does not disclose a puncturer that can serve the two purposes of piercing a puncturable seal and then subsequently following the piercing as an outlet from the container.

Further benefits and advantageous embodiments of the invention will become apparent from the dependent claims, from the description and from the accompanying drawings.

At least one of the at least two materials may be a fluid. Preferably, each of the at least two materials is selected from the group of members consisting of a dental fluid, a medical fluid, an ophthalmic fluid, a veterinary fluid and combinations of the foregoing, in particular wherein the first material is stored in the first chamber and the second material is stored in the second chamber.

It is to be understood that at least one of the at least two materials may be a solid, especially a powdery solid, whereas the other material is preferably a fluid such as a liquid. In alternative designs both materials may be a fluid. In the dental field the combined materials may form an adhesive, a bleaching agent, a cleaning agent, a cement mixture for making molds and/or implants etc.

Preferably, the first housing surrounds the first chamber and/or the second housing surrounds the second chamber.

The cap may be easily moved from the storage position into the end position if the opening of the first chamber, the two openings of the second chamber and/or the passage of the cap are aligned along the longitudinal axis of the container, in particular are co-axially aligned at the longitudinal axis. It is to be understood that the longitudinal axis of the container, the moving direction of the cap and the passage of the cap are aligned basically in parallel to each other. It should also be noted that the passage may be shaped generally like a hollow cylinder with a pointed end and a central axis of the passage is aligned in parallel to or at least substantially in parallel to the longitudinal axis of the container.

In order to securely store the second material in the second chamber, the second chamber may be closed off with a second closure film that closes off the second opening of the second chamber opposite to the first opening facing towards the first chamber, with the second closure film being piercable by the piercing member on moving the cap from the storage position into its end position.

In a similar manner, the first material may be securely stored in the first chamber, if the first chamber is sealed with a third closure film that closes off the opening of the first chamber. The third closure film is then also piercable by the piercing member on moving the cap from the storage position into its end position.

By using several closure films the material stored in the chamber can have an improved storage life.

Optimum results in piercing a closure film are achieved if the piercing member is formed by a slanted tip at the end of the passage, with the tip facing towards the first and second chambers in the storage position of the cap.

It is to be understood, that not only the first and/or second chambers may be closed off with a closure film but also the outlet of the cap. In particular, the outlet of the cap may be closed off by a tear away closure film, which further increases the storage life. Each one of the closure films may have thickness between 50 µm and 2 mm.

The closure film may be affixed to a rim surrounding the corresponding opening by means of hot stamping or ultrasonic sealing.

According to a preferred embodiment, at least one of the closure films is a membrane. The membrane may be made of a plastic material or a rubber material. Such membrane increases storage life and at the same time facilitates a more simple piercing by the piercing member. In particular, the membrane is made of a material that is impermeable to liquids and/or gases such as water and/or oxygen. It is to be understood that the membrane selected for use with the container is also inert to the material stored in the respective chamber in order to ensure a sufficient storage life of the materials stored in the container.

The first housing may define a base of the container on an opposite side to the opening of the first chamber. Preferably, the base has a pedestal for safe stand of the container.

In the end position of the cap, a wall of the passage may contact an inner wall of the first chamber, which allows for sufficient emptying of the container without no or only a minimum loss of the combined or mixed materials inside the container.

Easy emptying of the container may be further facilitated by a section of the passage opposite to the piercing member forming an outlet, in particular truncated cone-shaped outlet, for the at least two materials, in particular for the mixed at least two materials.

The first and second housings may be separate elements which each comprise connection means for connecting the first and second housings to one another, with the connection means in particular being snap-on connection means. If the first and second housings are separate elements, the first material may be filled into the first chamber separately from the second material which is filled into the second chamber. In particular, the first material may be filled into the first chamber at a remote place for filling the second material into the second chamber. By separately filling the first material into the first chamber and the second material into the second chamber and then assembling the filled first and second housings, an unwanted reaction of the materials may be avoided, which may occur if each of the first and second materials are consecutively filled into each of the chambers of the container.

Furthermore, the cap may also be a separate element to the first housing and/or to the second housing which each comprise connection means for connecting the cap to the first housing and/or to the second housing to form connection between the cap and the at least one of the first and second housings, with the connection means in particular being snap-on connection means.

Preferably, the connection between the cap and the first housing and/or to the second housing is formed by a part of the cap comprising a hook shaped, in particular an elastically shaped, member which, in the storage position of the cap, is located between a first counterpart formed at the first housing and a second counterpart formed at the second housing. It is to be understood, that the cap may also be connected only to either one of the first and second housings.

According to a preferred embodiment, the first counterpart formed at the first housing and/or the second counterpart formed at the second housing further comprise/comprises a stop element which prevents the cap from independently moving from the storage position into the end position.

The stop element may comprise a pre-determined breaking point that is determined to break at a pre-defined force such that the stop element can be overcome in order to move the cap from the storage position into the end position on application of said force for the purpose of mixing and dispensing the materials stored in the container.

In order to avoid canting, i.e. a misalignment of the parts of the container, and a faulty pairing, the container may comprise a guide structure for guiding the cap during moving from the storage position into the end position. Preferably, the guide structure comprises at least one protrusion cooperating with at least one groove, with the groove being provided at either one of the cap and the first housing and the protrusion either formed at the other of the first housing and the cap and with the groove and the protrusion being moved in parallel to the longitudinal axis of the container, wherein the number of each of the protrusions and/or the grooves is preferably 2 to 8, more preferably 3 to 5 and most preferably 4.

The components of the container, i.e. the first housing, the second housing and/or the cap, may be formed of a plastic material, in particular using injection molding.

The invention is also related to a method for producing a container for separately storing at least two materials and a method for mixing at least two materials separately stored in such a container.

In particular, the storage life may be enhanced, if the method for producing the container further comprises the steps of closing off the second opening of the second chamber that is arranged opposite to the first opening of the second chamber with a second closure film and the opening of the first chamber with a third closure film.

The method for mixing at least two materials may further comprise the steps of piercing a second closure film closing off a second opening of the second chamber arranged oppositely to the first opening of the second chamber and a third closure film closing off the opening of the first chamber.

In this connection it should be noted that according to further aspects of the invention these relate to the first housing, to the second housing and to the cap, with the respective member having the features described herein. In this way the individual components of the container could be filled with components by different suppliers and then the respective components are assembled at one site to form the container.

The invention will be explained in the following in detail by means of embodiments and with reference to the drawing, wherein:
- Fig. 1: is a cross-sectional view of a container;
- Fig. 2: is a perspective cross-sectional view of the container of Fig. 1 with its components being separated;
- Fig.3: is a perspective cross-sectional view of the container of Fig. 1 in a storage position;
- Fig. 4: is a perspective cross-sectional view of the container of Fig. 1 in an end position;
- Fig. 5: is a perspective view of a first housing of the container of Fig. 1;
- Fig. 6: is a cross-sectional perspective view of the first housing of Fig. 5;
- Fig. 7: is a perspective view of a second housing of the container of Fig. 1; and
- Fig. 8: is a cross-sectional perspective view of the second housing of Fig. 7.

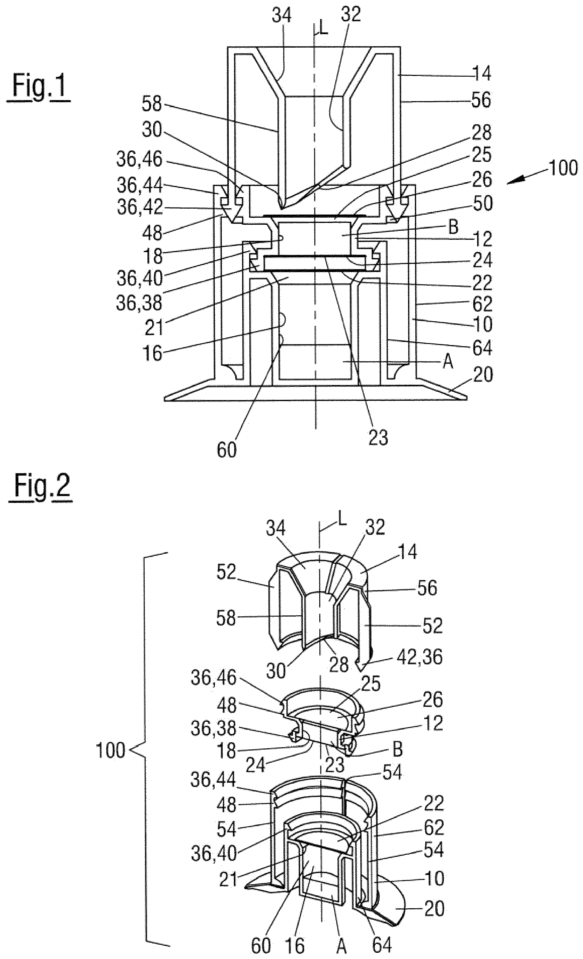

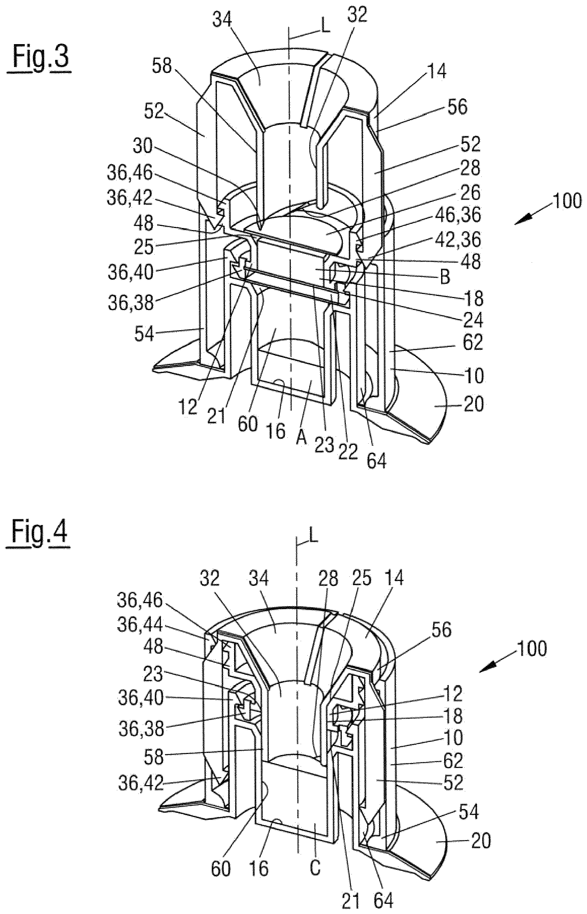

Fig. 1 to 4 show different views of a container 100. The container 100 is adapted for separately storing at least two materials A, B as shown in Fig. 1 to 3, wherein in Fig. 4 the two materials A and B are combined thereby forming a product C. The first material A and the second material B may be two dental materials forming a dental adhesive C.

The container 100 comprises a first housing 10, a second housing 12 and a cap 14, wherein the first housing 10 surrounds a first chamber 16 which stores the first material A and the second housing 12 surrounds a second chamber 18 which stores the second material B. The first housing 10, the second housing 12 and the cap 14 basically define hollow cylinder like bodies.

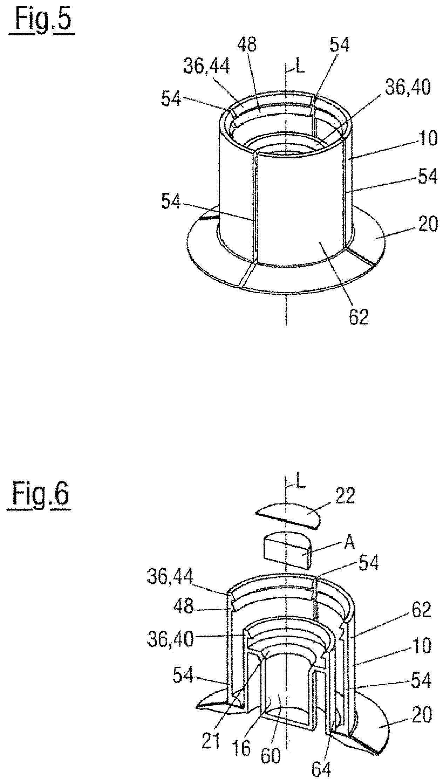

The first housing 10 is shown in detail in Fig. 5 and 6, wherein Fig. 5 is a perspective view of the entire housing 10 and Fig. 6 is a perspective cross-sectional explosion view of the first housing 10 also showing the first material A and a closure film 22 (third closure film) for closing off an opening 21 of the first chamber 16 of the first housing 10. The first housing 10 defines a base of the container 100 and comprises a pedestal 20 which is arranged opposite to the opening 21 of the first chamber 16.

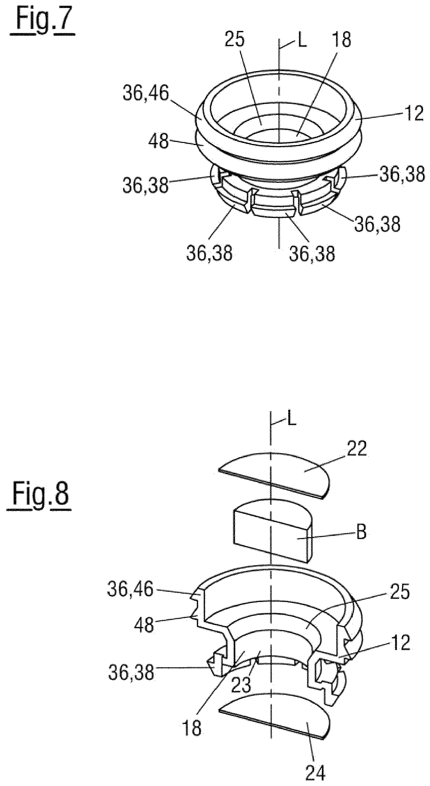

The second housing 12 is shown in detail in Fig. 7 and 8. Fig. 7 depicts a perspective view of the entire second housing 12, whereas Fig. 8 shows a perspective cross-sectional explosion view of the second housing 12. Fig. 8 further shows the second material B as well as a first closure film 24 for closing off a first opening 23 of the second chamber 18 that faces towards the opening 21 of the first chamber 16 when the container 100 is assembled. Hence, the second closure film 26 defines a bottom of the second chamber 18.

Furthermore, a second opening 25 of the second chamber 18 is closed off by a second closure film 26 (as also indicated in Fig. 8). By closing off the first and second openings 23, 25 by the first and second closure films 24, 26, respectively, the second material B is securely stored in the second chamber 18.

Fig. 1 shows a cross-sectional view of the container 100. In the shown Figure each of the closure films 22, 24, 26 is a membrane that is piercable by a piercing member 28. The piercing member 28 is formed by a slanted tip 30 at one end of a passage 32 extending through the cap 14. The other end of the passage 32, i.e. the end of the passage 32 that is opposite to the piercing member 28, forms an outlet 34. Fig. 1 shows a truncated cone-shaped outlet 34 for the two materials A, B. The outlet 34 may also have a different shape.

Between the outlet 34 and the slanted tip 30 the piercing member 28 has a cylindrical or at least substantially cylindrical outer shape.

In a storage position of the cap 14, i.e. a position in which the piercing member 28 is arranged outside of the first and second chambers 16, 18, the tip 30 faces towards the first and second chambers 16, 18 (see e.g. Fig. 1 and 3).

As becomes particularly apparent from Fig. 2, the first housing 10, the second housing 12 and the cap 14 are separate elements of the container 100, which each comprise connection means 36. In the present embodiment, the connection means 36 are snap-on connection means, so that the elements of the container 100 are easy to assemble. After being assembled, the opening 21 of the first chamber 16, the first and second openings 23, 25 of the second chamber 18 and the passage 32 of the cap 14 are aligned along a longitudinal axis L of the container 100 (Fig. 1 and 3).

In order to connect the second housing 12 to the first housing 10, the second housing 12 comprises hook shaped elastic members 38 which cooperate with a counterhook 40 of the first housing 10, when the first and second housings 10, 12 are connected. As can be seen best from Fig. 7, the multiple hook shaped elastic members 38 of the second housing 12 are annularly arranged around the first opening 23 of the second chamber 18. After assembly of the container 100, the multiple hook shaped elastic members 38 of the second housing 12 face towards the first chamber 16.

In this connection it should be noted that rather using multiple hook shaped elastic members 38 the second housing 12 may comprise a single circumferentially extending hook shaped member (not shown).

It is to be understood, that the container 100 may comprise more than one second housings 12 stacked about each other if more than the first and second materials A, B need to be separately stored. For this purpose, the second housing 12 may comprise connection means located on the opposite side of the connection means 36 used for connecting the second housing 12 to the first housing 10.

As can be seen best from Fig. 1, the second housing 12 is located inside the first housing 10 when assembled. The second housing 12 rests on top of the first chamber 16 and is at least partly received within the first housing 10. In particular the cap 14, the second housing 12 and the first housing 10 are coaxially arranged with respect to the longitudinal axis L.

For connecting the cap 14 to the first and second housings 10, 12, the cap 14 comprises a hook shaped elastic member 42, which in the storage position of the cap 14 is located between a first counterpart 44 formed on the first housing 10 and a second counterpart 46 formed on the second housing 12. The first counterpart 44 of the first housing 10 is hook shaped and faces radially inwards with respect to the longitudinal axis L of the container 100, whereas the second counterpart 46 of the second housing 12 faces radially outwards with respect to the longitudinal axis L of the container 100.

The cap 14 is intended to be movable from the storage position (Fig. 3) into an end position (Fig. 4) in which the piercing member 28 extends through the second chamber 18 and into the first chamber 16, so that the passage 32 acts as an outlet 34 for the mixed materials A, B. On moving the cap 14 towards the first and second housings 10, 12, the piercing member sequentially pierces open the third, second and first film closures 26, 24, 22.

However, in order to prevent the cap 14 from independently moving from the storage position into the end position, the first counterpart 44 formed on the first housing 10 and the second counterpart 46 formed on the second housing 12 each further comprise a stop element 48. Each of the stop elements 48 is arranged underneath the first counterpart 44 and the second counterpart 46, respectively, when viewing from the outlet 34 of the cap 14 into direction of the pedestal 20 of the first housing 10 along the longitudinal axis L of the container 100.

As can be seen best from Fig. 1, the stop element 48 of the second housing 12 further comprises a predetermined breaking element in form of an annular lip 50. It is to be understood that the stop element 48 of the first housing 10 may also comprise a predetermined breaking element or that each of the stop elements 48 of the first and second housings 10, 12 may comprise a predetermined breaking element. The predetermined breaking element may also have a shape different to that of the annular lip 50.

The connection means 36 for connecting the first and second housings 10, 12 are arranged radially inwardly with respect to the connection means 36 for connecting the cap 14 to the first and second housings 10, 12. Such an arrangement of the respective connection means 36 allows for the cap 14 to be easily moved from the storage position into the end position.

For supporting the movement of the cap 14 from the storage position into the end position, the container 100 further comprises a guide structure. In the present embodiment, the guide structure comprises four equally spaced protrusions 52 formed at an outer wall 56 of the cap 14. Each of the protrusions 52 cooperates with a corresponding groove 54 provided on the first housing 10.

As can be seen best from Fig. 5, the first housing 10 comprises four equally spaced grooves 54, which each form a slit penetrating an outer wall 62 of the first housing 10. It is to be understood that at least one of the grooves 54 may also be formed as a notch. Furthermore, the number of protrusions 52 and grooves 54 may be different from four, i.e. the container 100 may comprise more or less than four protrusions 52 and/or grooves 54.

Regarding Fig. 4, which shows the container 100 in the end position, the outer wall 56 of the cap 14 is located between the outer wall 62 of the first housing 10 and an intermediate wall 64 arranged in radial direction with respect to the longitudinal extension axis L between the first chamber 16 and the outer wall 62 of the first housing 10 (see also Fig. 6). Therefore, the container 100 is rather compact in the end position facilitating single handed use of the container.

Hereinafter a method for producing the container 100 for separately storing at least two materials A, B will be described. The method starts with the step of providing the first housing 10 and filling the first chamber 16 of the first housing 10 with the first material A. In order to increase the storage life of the first material A contained in the first chamber 16, the opening 21 of the first chamber 16 may be closed off by a closure film 22 (Fig. 6). Next, the second material B is filled into the second chamber 18 of the second housing 12, the first opening 23 of which is to this end closed off by the first closure film 24 defining a bottom of the second chamber 18 (Fig. 8) prior to filling the second chamber 18 with the material B. The second opening 25 of the second chamber 18 may be also closed off by the second closure film 26 to enhance storage life of the second material B stored in the second chamber 18.

It is to be understood that filling of the first and second materials A, B may be conducted at remote places, as the first and second housings 10, 12 are separate elements of the container 100.

After filling the first and second chambers 16, 18 with the first and second materials A, B, respectively, the first and second housings 10, 12 are connected using the connection means 36, 38, 40. Subsequently, the cap 14 is connected to the first and second housings 10, 12 using the connection means 36, 42, 44, 46. The stop elements 48 provided at the first and second housings 10, 12 keep the cap 14 in the storage position and the container 100 is ready for use, as will be described hereinafter.

The method for mixing at least two materials A, B separately stored in the container 100 begins with providing the container 100 being arranged in the storage position (Fig. 1 and 3). By moving, i.e. pushing, the cap 14 towards the first and second housings 10, 12 into the end position, the piercing member 28 of the cap 14 pierces each respective closure film 22, 24, 26.

The sharp edge of the slanted tip 30 of the piercing member 28 penetrates the respective closure film 22, 24, 26 and after pushing the piercing member 28 a few mm towards the base, the cylindrical shaped part of the piercing member 28 engages the respective closure film 22, 24, 26 and causes the respective closure film 22, 24, 26 to deflect outwardly in order to move aside the respective closure film 22, 24, 26 and to clamp this between inner walls of the container 100, for example an inner wall 60 of the first chamber 16 and the piercing member 28.

Once the respective closure film 22, 24, 26 has been pierced and starts to be deflected outwardly the second material B passes from the second chamber 18 into the first chamber 16 containing the first material A. It is to be understood that the first chamber 16 is to this end sufficiently large to receive the first material A as well as the second material B.

In the first chamber 16, the first material A and the second material B may react to form material C (Fig. 3). In the end position shown in Fig. 3, a wall 58 of the passage 32 contacts the inner wall 60 of the first chamber 16 and the passage 32 acts as an outlet 34 for the material C.

### List of reference sings

- 10: first housing
- 12: second housing
- 14: cap
- 16: first chamber
- 18: second chamber
- 20: pedestal
- 21: opening
- 22: closure film
- 23: first opening
- 24: first closure film
- 25: second opening
- 26: second closure film
- 28: piercing member
- 30: tip
- 32: passage
- 34: outlet
- 36: connection means
- 38: hook shaped member
- 40: counterhook
- 42: hook shaped member
- 44: first counterpart
- 46: second counterpart
- 48: stop element
- 50: annular lip
- 52: protrusion
- 54: groove
- 56: outer wall
- 58: wall
- 60: inner wall
- 62: outer wall
- 64: intermediate wall
- 100: container

- A: first material
- B: second material
- C: product
- L: longitudinal axis

## Claims

1. Container (100) for separately storing at least two materials (A, B) comprising:
a first housing (10) comprising a first chamber (16) for storing a first material (A) and comprising an opening (21),
at least one second housing (12) comprising a second chamber (18) for storing a second material (B) and comprising first and second oppositely disposed openings (23, 25), with the first opening (23) of the second chamber (18) being arranged to face the first chamber (16) and being closed off by a first closure film (24) and
a cap (14) moveable along a longitudinal axis (L) of the container (100) towards the first and second chambers (16, 18), the cap (14) comprising a passage (32) and a piercing member (28) being formed at an end of the passage (32) configured to pierce at least one closure film (22, 24, 26) comprising the first closure film (24) on moving the cap (14) from a storage position in which the piercing member (28) is arranged outside of the first and second chambers (16, 18) into an end position in which the piercing member (28) extends through the second chamber (18) and into the first chamber (16), with the passage (32) acting as an outlet (34) from the container (100) in the end position.

2. Container (100) according to claim 1, wherein
the first housing (10) surrounds the first chamber (16) and/or the second housing (12) surrounds the second chamber (18).

3. Container (100) according to claim 1 or 2, wherein
the opening (21) of the first chamber (16), the two openings (23, 25) of the second chamber (18) and/or the passage (32) of the cap (14) are aligned along the longitudinal axis (L) of the container (100), in particular are co-axially aligned at the longitudinal axis (L).

4. Container (100) according to at least one of the preceding claims, wherein
in the end position of the cap (14), a wall (58) of the passage (32) contacts an inner wall (60) of the first chamber (16).

5. Container (100) according to at least one of the preceding claims, wherein
a section of the passage (32) opposite to the piercing member (28) forms an outlet (34), in particular a truncated cone-shaped outlet (34), for the at least two materials (A, B), in particular for the combined at least two materials (C).

6. Container (100) according to at least one of the preceding claims,
further comprising a second closure film (26) that closes off the second opening (25) of the second chamber (18) opposite to the first opening (23) facing towards the first chamber (16), with the second closure (26) film being piercable by the piercing member (28) on moving the cap (14) from the storage position into its end position.

7. Container (100) according to at least one of the preceding claims,
further comprising a third closure film (22) that closes off the opening (21) of the first chamber (16), with the third closure film (22) being piercable by the piercing member (28) on moving the cap (14) from the storage position into its end position.

8. Container (100) according to at least one of the preceding claims, wherein at least one of the closure films (22, 24, 26) is a membrane.

9. Container (100) according to at least one of the preceding claims, wherein
the piercing member (28) is formed by a slanted tip (30) at the end of the passage (32), with the tip (30) facing towards the first and second chambers (16, 18) in the storage position of the cap (14).

10. Container (100) according to at least one of the preceding claims, wherein
the first and second housings (10, 12) are separate elements which each comprise connection means (36) for connecting the first and second housings (10, 12) to one another, with the connection means (36) in particular being snap-on connection means.

11. Container (100) according to at least one of the preceding claims, wherein
the cap (14) is a separate element to the first housing (10) and/or to the second housing (12) which each comprise connection means (36) for connecting the cap (14) to the first housing (10) and/or to the second housing (12) to form a container (100) between the cap (14) and at least one of the first and second housings (10, 12), with the connection means (36) in particular being snap-on connection means.

12. Container (100) according to claim 11, wherein
the connection is formed by a part of the cap (14) comprising a hook shaped, in particular an elastically shaped, member (42) which, in the storage position of the cap (14), is located between a first counterpart (44) formed at the first housing (10) and a second counterpart (46) formed at the second housing (12), optionally wherein
the first counterpart (44) formed at the first housing (10) and/or the second counterpart (46) formed at the second housing (12) further comprise/comprises a stop element (48) which prevents the cap (14) from independently moving from the storage position into the end position, in particular wherein the stop element comprises a pre-determined breaking point.

13. Container (100) according to at least one of the preceding claims, further comprising a guide structure for guiding the cap (14) during moving from the storage position into the end position, optionally wherein
the guide structure comprises at least one protrusion (52) cooperating with at least one groove (54), with the groove (54) being provided at either one of the cap (14) and the first housing (10) and the protrusion (52) either formed at the other of the first housing (10) and the cap (14) and with the groove (54) and the protrusion (52) being moved in parallel to the longitudinal axis (L) of the container (100), preferably the number of each of the protrusions (52) and/or the grooves (54) being preferably 2 to 8, more preferably 3 to 5 and most preferably 4.

14. Container (100) according to at least one of the preceding claims, wherein
the first material (A) is stored in the first chamber (16) and the second material (B) is stored in the second chamber (18), optionally wherein
each of the at least two materials (A, B) is selected from the group of members consisting of a dental fluid, a medical fluid, an ophthalmic fluid, a veterinary fluid and combinations of the foregoing.

15. Container (100) according to at least one of the preceding claims, wherein
the first housing (10) and/or the second housing (12) and/or the cap (14) is/are formed of a plastic material, in particular using injection molding.

16. Method for producing a container (100) for separately storing at least two materials (A, B), in particular according to at least one of the preceding claims, comprising the steps of:
- providing a first housing (10) comprising a first chamber (16) and an opening (21);
- optionally filling the first chamber (16) with a first material (A);
- providing a second housing (12) comprising a second chamber (18) and further comprising first and second oppositely disposed openings (23, 25);
- closing off at least one of the two opposite openings (23, 25) of the second chamber (18) by a first closure film (24);
- optionally filling the second chamber (18) with a second material (B);
- providing a cap (14) comprising a passage (32) and a piercing (28) member configured to pierce at least one closure film (22, 24, 26) comprising the first closure film (24); and
- assembling the first housing (10), the second housing (12) and the cap (14) along a longitudinal axis (L) of the container (100) in a storage position such that the first closure film (24) closing off a first opening (23) of the second chamber (18) faces towards the first chamber (16) and the piercing member (28) of the cap (14) directs towards the first closure film (24), with the piercing member (28) and the first closure film (24) being apart from each other.

17. Method for mixing at least two materials (A,B) separately stored in a container (100), in particular according to at least one of the preceding claims 1 to 16, comprising the steps of:
- providing the container (100);
- moving a cap (14) of the container (100) comprising a passage (32) and a piercing member (28) from a storage position towards a first and second housing (10, 12) of the container (100) into an end position;
- thereby piercing with a piercing member (28) of the cap (14) at least one closure film (22, 24, 26) comprising a first closure film (24) which closes off a first opening (23) of a second chamber (18) of the second housing (12) and which faces towards a first chamber (16) of the first housing (10); and
- using the passage (32) of the cap (14) as an outlet (34) from the container (100) in the end position.
